# EUROPEAN PATENT SPECIFICATION

(11) **EP 0 386 123 B1**
(45) Date of publication and mention of the grant of the patent: **17.08.1994**
(21) Application number: 88910406.3
(22) Date of filing: 09.11.1988
(51) Int. Cl.: G01J 3/46, G01N 21/25

(54) **AN APPARATUS FOR COLOUR CONTROL OF OBJECTS**
ANORDNUNG ZUR STEUERUNG DER FARBE EINES GEGENSTANDES
APPAREIL DE CONTROLE DE LA COULEUR D'OBJETS

(30) Priority: 10.11.1987 DK 5875/87
(43) Date of publication of application: 12.09.1990
(73) Proprietor: NELTEC A/S, DK-6541 Bevtoft (DK)
(72) Inventor: Nielsen, Bjarne Christian, DK-6541 Bevtoft (DK)
(74) Representative: Wittrup, Flemming
(86) International application number: PCT/DK88/00185
(87) International publication number: WO 89/04468

(56) References cited:
- CH-A- 612 760
- CH-A- 655 183
- DE-A- 1 942 746
- DE-A- 2 633 087
- DE-A- 3 244 286
- GB-A- 2 066 452
- GB-A- 2 128 732
- SE-B- 363 902
- SE-B- 440 401
- US-A- 4 131 540
- US-A- 4 647 211

## Description

The invention concerns a process of colour control of objects, said process using a light source for illuminating an object with light of great intensity compared to background illumination and a detector having a plurality of sensors each of which is adapted to colour filter and measure that light reflected from the object, said light source being adapted to evenly illuminate a measurement area containing the part of the object whose colour is to be determined, and an apparatus of the type defined in the introductory portion of claim 7.

In industrial colour control or colour sorting it is often necessary to control objects which move with a great velocity, have different sizes, are hot or wet or are difficult to bring into contact with colour control equipment for other reasons. It is therefore desirable that the colours of the objects can be controlled at a distance.

It is known from the German Patent Specification DE-A-3 244 286 to perform colour control by illuminating an object with light from a pulsed source of light, whereupon the reflected light is detected. The reflected light is imaged through a lens system on one of the sensors of the detector unit, either directly or through fiberoptics. The collected light is compared with a reference signal from the light source, whereby the colour of the object can be determined. The object is here imaged through a lens system which focuses the object on the ends of the fiberoptics passing the light focused with the lens to one or more sensors which thereby give a measure of the colour of the object. Use of imaging optical systems in such devices makes extremely heavy demands on mechanical stability since mechanical influences easily defocus the lens system. Thus, devices with imaging optical systems are practically unuseful for applications where the objects to be controlled are not homogeneous, which is e.g. the case with most food products, including vegetables, fish and meat. In known colour control devices using imaging optical systems height variations of the object to be measured give incorrect results, while objects whose colour varies give measurement results which are not reproducible.

In the US Patent Specification 4 131 540 it has been attempted to overcome a number of the drawbacks by which imaging optical systems are normally vitiated. The US Patent Specification 4 131 540 discloses a tomato sorting system with an imaging system which images the tomatoes on a diffusor or a ground glass plate, behind which photosensitive units give a measure of the colour of the object. However, the apparatus is still sensitive to variations in distance because the object is well-defined only at the ideal distance from the measurement area. With other distances a rim zone occurs whose contribution to the measurement depends upon the distance, the shape of the object, as well as the distribution of light, shade and saturation over the object, in complicated manner. The illumination of the detectors from a given measurement area on the object varies more than the distance from the well-known law of distance, since part of the light falls outside the ground glass plate in case of deviation from the ideal imaging distance. When using a ground glass plate or a diffusor it is also a problem to measure the colour of objects having a varying colour distribution across the measurement area, since an object which is half green and half red within the measurement area will e.g. be imaged on the ground glass plate with a corresponding colour distribution. Thus, it applies to the red detector that the detected amount of light depends upon whether the red part of the object is disposed in the nearest or most remote part of the ground glass plate. The same applies to the green detector.

The object of the invention is to provide an apparatus which is capable of giving reproducible measurements of a colour of an object, irrespective of its position in the measurement area. Further, the measurement must be contact-free and the representation of the colour of the object must be independent upon variations in thickness.

This object is achieved by a process according to claim 1. The position of the detector at a great distance from the measurement area entails that the sensors of the detector receive substantially the same amount of light from all parts of the measurement area, which eliminates the sensitivity of the apparatus to variations in thickness or height of the measured object, this being expedient in measurements on e.g. pieces of meat and on a continuous sugar path on a conveyor belt.

Objects having various sizes and irregular shapes (e.g. shrimps) can be measured when they are placed on a black background or when light falling outside the objects is otherwise prevented from reaching the detectors. These measurements will be reproducible and independent upon where the objects are present in the measurement area, since all parts of the measurement area provide equal contributions to the colour representation formed by the detector.

The measurement area can be formed in any manner (e.g. a streak transversely to a conveyor belt with sugar), and its size can be varied within a very large range. Since the size of the measurement area is adjusted solely by regulating the aperture of the light source, and since the position and angle of the detector are non-critical, a simple and inexpensive optical system is obtained, where changing to new objects is performed merely by changing the aperture of the light source. Thus, in case of visual inspection it is easy to change the size of the measurement area, and currently to check whether the measurement area has moved since the measurement area corresponds to the illuminated region.

The lens and the diaphragm used in the system between light source and object are only used for varying the size of the illuminated area. The diaphragm is a visual field diaphragm in contrast to the aperture diaphragms which are used in the prior art to improve the image quality. The colour then recorded by the sensors will thus be indicative of the average colour in the entire illuminated area. Since no imaging lens systems or the like are incorporated between the object and the detector, the apperatus is not sensitive to changes in the position of the object within the measurement area. Since the number of optical boundary faces is limited, the losses in the system are likewise limited. These are now substantially propagation losses between object and detector, which makes it possible to measure with a great distance between object and measuring equipment.

Further, the apparatus is suitable for measuring an average value for objects having greatly varying colour patterns.

When, as stated in the introductory portion of claim 2, the light source is a xenon flash lamp, which is approximately point-shaped, and a convex lens, the structure defined in the characterizing portion of this claim entails that the illumination can be limited to just the desired measurement area which may have an arbitrary, desirable form.

Means for filtering signal contributions from the surroundings are stated in claim 3.

The invention also concerns the use of the stated process for measuring the dimension of an object in a specific direction, and the characteristic aspect of the process according to the invention is stated in the characterizing portion of claim 4. With this feature, the detected reflected light intensity is a measure of the dimension of the object in the beam direction, e.g. its width.

When, as stated in claim 5, dimensional measurement is performed in a plurality of specific positions, the form of the object can be determined. The object may e.g. be positioned on a conveyor belt, and the individual measurements can be performed in predetermined positions of this belt.

Means for eliminating light contributions from a specular background behind the objects whose colours are to be determined are stated in claim 6. This capitalizes the knowledge that polarized light remains polarized after specular reflection, but is spread as diffuse light by a non-specular surface.

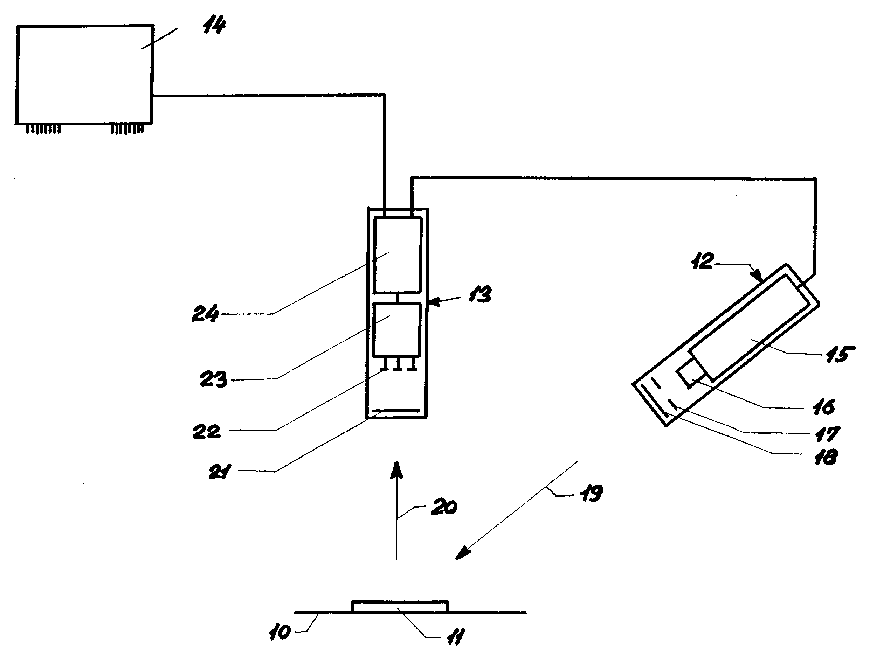

An embodiment of the apparatus of the invention is shown schematically in the drawing and will be described in more detail below with reference to this drawing.

In the drawing, 10 is a conveyor belt on which objects 11 to be colour controlled are conveyed. When an object arrives at the control position at an illumination unit 12 and a detector unit 13, a control unit 14 is informed that measurement is to take place. This information is passed on to the detector unit 13 and via this to the illumination unit 12. The latter has a power supply unit 15 with a trigger to trigger a xenon flash lamp 16, which forms an approximately point-shaped light source and emits a strong light pulse with a duration of 2-6 µs on reception of the signal from the control unit. This light passes through a visual field diaphragm 17 having a shape corresponding to the area of the object 11 whose colour is to be controlled and through a convex lens 18 which sends a beam of substantially parallel rays 19 towards the object 11.

When the object is non-specular, it spreads diffuse light, and part of this light impinges on the detector unit 13 which has a lens 21 which sends the light towards three sensors 22 having different spectral sensitivities. The detector unit is positioned at such a great distance from the object that each sensor receives substantially the same amount of light from the various parts of the illuminated area from the object. The lens 21 may be omitted since it only serves as an amplifying element and does not serve as an imaging element. The detector does not satisfy the imaging equation, but is positioned considerably more closely to the lens than to the image point. The sensors may optionally each have their own colour filter (not shown). The signals from the sensors are amplified by amplifiers 23, which are adapted to only allow signals having the same timewise variation as the light source to pass, and the amplified analog signals are converted to digital signals in an A/D converter and a computing unit 24. The computing unit computes the colour and intensity of the light on the basis of the values of the three signals, and the measurement result is compared with stored values corresponding to approval/rejection of the object in question. When sorting, the measurement results are compared with a plurality of stored limits, and the object is classified accordingly.

The object may also be fluorescent and be illuminated with excitation light with a specific wavelength through a colour filter.

The apparatus may be used for size determination by illumination of an area having at least the same size as the object. The measured intensity of light with the colour of the object is indicative of the size (area) of the object. If the object is placed on a background having a colour different from the object, the reliability of the size determination will be particularly great, it being possible to determine the intensity of light both with the colour of the object and with the colour of the background. This procedure is of particular importance if the colour is not quite constant from object to object.

When applying the system to width determination, the object is illuminated in a narrow streak transversely to the object. The measured intensity of light having the colour of the object is indicative of the width of the object.

Shape determination may be performed by positioning the object on a conveyor belt running past a width determining set-up as described above. Comparison of measurements of the width of the object with simultaneous measurements of the position of the conveyor belt provides an indication of the shape of the object. It may e.g. be determined in this way whether an ice-cream cone has its tip pointing forwardly or rearwardly on the conveyor belt, which is important in automatic packaging procedures.

When using a set of intersecting polarization filters, placed at the illumination units and at the detector unit, respectively, the apparatus may be used for colour determination of objects present on a specular background, since specular light is completely suppressed by the polarization, while only 75% of diffuse light disappears. Similarly, undesirable reflections from wet glossy or otherwise specular surfaces are suppressed.

This set-up may also be used for detecting whether an impurity is present on a specular surface and for determining the colour of the impurity. What is in mind here is particular detection whether an egg white present in a stainless steel container is polluted with yolk or something else. When using the colour controlling properties of the apparatus it may be determined whether the impurity consists of yolk, blood or yolk string.

The shown and described apparatus may be modified in several ways within the scope of the invention as claimed. E.g., a modulated lamp, which may be a xenon lamp, may be used as a light source instead of a flash lamp.

## Claims

1. A process of colour control of objects (11), using a light source (12) for illuminating an object (11) with light of great intensity compared to background illumination and a detector (13) having a plurality of sensors (22) each of which is adapted to colour filter and measure the light reflected from the object (11), said light source (12) being adapted to evenly illuminate a measurement area containing the part of the object (11) whose colour is to be determined, **characterized** by positioning the detector (13) at such a great distance from the measurement area with the object (11) that each of the sensors (22) of the detector (13) receives substantially the same amount of light from all parts of the illuminated measurement area, and by exposing the sensors (22) to the light reflected from the measurement area without using optical imaging means.

2. A process according to claim 1, **characterized** by using a xenon flash lamp as light source (12), and by interposing a diaphragm (17) between the light source (12) and the objects (11), said diaphragm limiting the illumination of the objects (11) to the desired measurement area.

3. A process according to claim 2, **characterized** by using amplifiers (23) for amplification of electric signals which each represent the light detected by the sensors (22), wherein the amplifiers (23) are adapted to filter the signal contributions originating from light having another time-wise variation then the illumination pulses of the xenon flash lamp.

4. A process according to claim 1, 2 or 3 for measurement of the dimension of an object in a specific direction, **characterized** in that the object is illuminated in a streak in said specific direction.

5. A process according to claim 4 for determination of an indication of the shape of the object, **characterized** by positioning the object onto a running conveyor belt which runs past the detector (13), wherein dimensional measurement in a plurality of specific positions of the object are carried out by comparison of measurements of the width of the object with simultaneous measurements of the position of the conveyor belt.

6. A process according to claim 1 where the objects are positioned on a specular measurement area, **characterized** by interposing a first polarization filter having a first polarization direction between the light source (12) and an object (11), and by interposing a second polarization filter havng a polarization direction orthogonal to the first polarization direction posed between the object and the detector.

7. An apparatus for colour control of objects (11), containing a light source (12) for illuminating an object (11) with light of great intensity compared to the background illumination and a detector (13) having a plurality of sensors (22) each of which is adapted to filter and measure the light reflected from the object (11), said light source (12) being adapted to evenly illuminate a measurement area containing the part of the object (11) whose colour is to be determined, **characterized** in that the detector (13) is positioned at such a great distance from the measurement area with the object (11) that each of the sensors (22) of the detector (13) receives substantially the same amount of light from all parts of the illuminated measurement area, and that the sensors (22) are exposed to the light reflected from the measurement area without using optical imaging means.

8. An apparatus according to claim 7, **characterized** in that the light source (12) is formed by a xenon flash lamp and in that a diaphragm (17) is interposed between the light source (12) and the objects (11), said diaphragm limiting the illumination of the objects (11) to the desired measurement area.

## Patentansprüche

1. Verfahren zur Farbkontrolle von Gegenständen (11) unter Verwendung einer Lichtquelle (12) zum Beleuchten eines Gegenstandes (11) mit Licht großer Intensität im Vergleich zur Hintergrundbeleuchtung und eines Detektors (13), der eine Vielzahl von Sensoren (22) aufweist, von denen jeder das vom Gegenstand (11) reflektierte Licht farbfiltern und messen kann, wobei die Lichtquelle (12) einen denjenigen Teil des Gegenstandes (11), dessen Farbe zu bestimmen ist, enthaltenden Meßbereich gleichmäßig beleuchten kann, dadurch gekennzeichnet, daß der Detektor (13) in einem derart großen Abstand vom Meßbereich mit dem Gegenstand (11) angeordnet wird, daß jeder der Sensoren (22) des Detektors (13) im wesentlichen die gleiche Lichtmenge von sämtlichen Teilen des beleuchteten Meßbereiches empfängt, und daß die Sensoren (22) dem vom Meßbereich reflektierten Licht ohne Verwendung von optischen Abbildungseinrichtungen ausgesetzt werden.

2. Verfahren nach Anspruch 1, dadurch gekennzeichnet, daß eine Xenon-Blitzlampe als Lichtquelle (12) verwendet und eine Blende (17) zwischen der Lichtquelle (12) und den Gegenständen (11) angeordnet wird, die die Beleuchtung der Gegenstände (11) auf den gewünschten Meßbereich beschränkt.

3. Verfahren nach Anspruch 2, dadurch gekennzeichnet, daß Verstärker (23) zum Verstärken von elektrischen Signalen, die jeweils das von den Sensoren (22) detektierte Licht repräsentieren, verwendet werden, wobei die Verstärker (23) die Signalverteilungen filtern können, die aus Licht resultieren, das eine andere zeitweise Veränderung besitzt als die Beleuchtungsimpulse der Xenon-Blitzlampe.

4. Verfahren nach Anspruch 1, 2 oder 3 zum Messen der Abmessung eines Gegenstandes in einer speziellen Richtung, dadurch gekennzeichnet, daß der Gegenstand in der speziellen Richtung in einem Streifen beleuchtet wird.

5. Verfahren nach Anspruch 4 zum Ermitteln einer Anzeige der Form des Gegenstandes, dadurch gekennzeichnet, daß der Gegenstand auf einem laufenden Förderband angeordnet wird, das am Detektor (13) vorbeiläuft, und daß die Dimensionsmessung in einer Vielzahl von speziellen Positionen des Gegenstandes ausgeführt wird, indem Messungen der Breite des Gegenstandes mit gleichzeitigen Messungen der Position des Förderbandes verglichen werden.

6. Verfahren nach Anspruch 1, bei dem die Gegenstände auf einem spiegelnden Meßbereich angeordnet werden, dadurch gekennzeichnet, daß ein erster Polarisationsfilter mit einer ersten Polarisationsrichtung zwischen der Lichtquelle (12) und einem Gegenstand (11) und ein zweiter Polarisationsfilter mit einer Polarisationsrichtung, die senkrecht zur ersten Polarisationsrichtung verläuft, zwischen dem Gegenstand und dem Detektor angeordnet werden.

7. Vorrichtung zur Farbkontrolle von Gegenständen (11), die eine Lichtquelle (12) zum Beleuchten eines Gegenstandes (11) mit Licht großer Intensität im Vergleich zur Hintergrundbeleuchtung und einen Detektor (13) aufweist, der eine Vielzahl von Sensoren (22) besitzt, von denen jeder das vom Gegenstand (11) reflektierte Licht filtern und messen kann, wobei die Lichtquelle (12) einen denjenigen Teil des Gegenstandes (11), dessen Farbe zu bestimmen ist, enthaltenden Meßbereich gleichmäßig beleuchten kann, dadurch gekennzeichnet, daß der Detektor (13) in einem derart großen Abstand vom Meßbereich mit dem Gegenstand (11) angeordnet ist, daß jeder der Sensoren (22) des Detektors (13) im wesentlichen die gleiche Lichtmenge von sämtlichen Teilen des beleuchteten Meßbereiches empfängt, und daß die Sensoren (22) dem vom Meßbereich reflektierten Licht ohne Verwendung von optischen Abbildungseinrichtungen ausgesetzt sind.

8. Vorrichtung nach Anspruch 7, dadurch gekennzeichnet, daß die Lichtquelle (12) durch eine Xenon-Blitzlampe gebildet ist und daß eine Blende (17) zwischen der Lichtquelle (12) und den Gegenständen (11) angeordnet ist, die die Beleuchtung der Gegenstände (11) auf den gewünschten Meßbereich beschränkt.

## Revendications

1. Procédé de contrôle de couleur d'objets (11), utilisant une source de lumière (12) destinée à éclairer un objet (11) avec une lumière de forte intensité comparée à l'éclairage du fond et un détecteur (13) ayant plusieurs capteurs (22) prévus chacun pour filtrer la couleur et mesurer la lumière réfléchie par l'objet (11), ladite source de lumière (12) étant prévue pour éclairer de manière égale une zone de mesure contenant la partie de l'objet (11) dont la couleur doit être déterminée, caractérisé par le fait de positionner le détecteur (13) à une distance suffisamment grande de la zone de mesure avec l'objet (11) de telle sorte que les capteurs (22) du détecteur (13) reçoivent sensiblement la même quantité de lumière de toutes les parties de la zone de mesure éclairée, et le fait d'exposer les capteurs à la lumière réfléchie par la zone de mesure sans utiliser de moyens de formation d'image optiques.

2. Procédé selon la revendication 1, caractérisé par l'utilisation d'une lampe à éclair au xénon comme source de lumière (12), et par l'interposition d'un diaphragme (17) entre la source de lumière (12) et les objets (11), ledit diaphragme limitant l'éclairage des objets (11) à la zone de mesure souhaitée.

3. Procédé selon la revendication 2, caractérisé par l'utilisation d'amplificateurs (23) destinés à l'amplification de signaux électriques qui représentent chacun la lumière détectée par les capteurs (22), les amplificateurs (23) étant prévus pour filtrer les contributions de signal provenant de la lumière ayant une autre variation dans le temps que les impulsions d'éclairage de la lampe à éclair au xénon.

4. Procédé selon la revendication 1, 2 ou 3 destiné à la mesure de la dimension d'un objet dans une direction spécifique, caractérisé en ce que l'objet est éclairé avec une raie dans ladite direction spécifique.

5. Procédé selon la revendication 4 pour la détermination d'un indication de la forme de l'objet, caractérisé par le fait de positionner l'objet sur une bande transporteuse en déplacement qui se déplace au-delà du détecteur (13), la mesure de dimension dans plusieurs positions spécifiques de l'objet étant réalisée par comparaison des mesures de la largeur de l'objet avec des mesures simultanées de la position de la bande transporteuse.

6. Procédé selon la revendication 1, dans lequel les objets sont positionnés sur une zone de mesure spéculaire, caractérisé par le fait d'interposer un premier filtre polarisant ayant une première direction de polarisation entre la source de lumière (12) et un objet (11), et par le fait d'interposer des deuxièmes filtres polarisants ayant une direction de polarisation perpendiculaire à la première direction de polarisation posée entre l'objet et le détecteur.

7. Appareil de contrôle de couleur d'objets (11), contenant une source de lumière (12) destinée à éclairer un objet (11) avec une lumière de forte intensité comparée à l'éclairage du fond et un détecteur (13) ayant plusieurs capteurs (22) prévus chacun pour filtrer la couleur et mesurer la lumière réfléchie par l'objet (11), ladite source de lumière (12) étant prévue pour éclairer de manière égale une zone de mesure contenant la partie de l'objet (11) dont la couleur doit être déterminée, caractérisé en ce que le détecteur (13) est positionné à une distance suffisamment grande de la zone de mesure avec l'objet (11) de telle sorte que les capteurs (22) du détecteur (13) reçoivent sensiblement la même quantité de lumière de toutes les parties de la zone de mesure éclairée, et en ce que le fait les capteurs sont exposés à la lumière réfléchie par la zone de mesure sans utiliser de moyens de formation d'image optiques.

8. Appareil selon la revendication 7, caractérisé en ce que la source de lumière (12) est formée par une lampe à éclair au xénon, et en ce qu'un diaphragme (17) est interposé entre la source de lumière (12) et les objets (11), ledit diaphragme limitant l'éclairage des objets (11) à la zone de mesure souhaitée.
